# EUROPEAN PATENT SPECIFICATION

(11) **EP 3 263 880 B1**
(45) Date of publication and mention of the grant of the patent: **14.04.2021**
(21) Application number: 15883374.9
(22) Date of filing: 08.12.2015
(51) Int. Cl.: F02F 3/10, F02F 3/00, F16J 1/04, F16J 1/08

(54) **INTERNAL COMBUSTION ENGINE FOR SADDLED VEHICLE, AND SADDLED VEHICLE**
VERBRENNUNGSMOTOR FÜR GRÄTSCHSITZFAHRZEUG UND GRÄTSCHSITZFAHRZEUG
MOTEUR À COMBUSTION INTERNE POUR VÉHICULE À SELLE, ET VÉHICULE À SELLE

(30) Priority: 27.02.2015 JP 2015037770
(43) Date of publication of application: 03.01.2018
(73) Proprietor: Yamaha Hatsudoki Kabushiki Kaisha, Iwata-shi, Shizuoka 438-8501 (JP)
(72) Inventor: SATO, Tatsuhiko, Iwata-shi Shizuoka 438-8501 (JP); KURITA, Hirotaka, Iwata-shi Shizuoka 438-8501 (JP)
(74) Representative: Grünecker Patent- und Rechtsanwälte PartG mbB
(86) International application number: PCT/JP2015/084384
(87) International publication number: WO 2016/136084

(56) References cited:
- EP-A1- 2 453 034
- JP-A- S6 158 956
- JP-A- H11 303 674
- JP-A- H11 324 793
- JP-A- 2000 179 399
- JP-A- 2005 330 941
- JP-A- 2008 036 710
- JP-A- 2008 309 118
- JP-A- 2010 090 812
- US-A1- 2010 236 516
- Manfred Röhrle: "Design and loading of the piston", Piston for internal Combustion Engines, 1 January 1994 (1994-01-01), pages 17-29, XP55689055, DE Retrieved from the Internet: URL:www.itisabooknotawebpage [retrieved on 2020-04-24]
- Manfred Röhrle: "Design and loading of the piston" In: "Piston for internal Combustion Engines", 1 January 1994 (1994-01-01), Verlag Moderne Industrie , Landsberg/Lech, DE, XP055689055, pages 17-29,

## Description

The present invention relates to an internal combustion engine for straddled vehicles according to the preamble of independent claim 1. The present invention also relates to a straddled vehicle. Such an internal combustion engine can be taken from the prior art document JP 2008-036710 A.

In recent years, a piston and a cylinder that are made of an aluminum alloy (which may hereinafter be referred to as an "aluminum piston" and an "aluminum cylinder", respectively) have come to be adopted as a piston and a cylinder of an internal combustion engine. Since an aluminum alloy has a small specific gravity, use of an aluminum piston and an aluminum cylinder allows the weight of an internal combustion engine to be reduced.

Moreover, an aluminum alloy has good thermal conductivity. Therefore, heat can be discharged from the piston to the cylinder more readily by using an aluminum piston and an aluminum cylinder and also omitting a cast-iron cylinder sleeve to be provided in the cylinder bore. However, if the piston skirt of an aluminum piston and the cylinder wall of an aluminum cylinder directly rub against each other, they are likely to seize. For this reason, the outer peripheral surface of the piston skirt is coated.

Conventionally, metal plating such as tin plating or iron plating has been provided as a coating for the piston skirt. Recently, a technique which coats the outer peripheral surface of the piston skirt with a resin (resin coating) has also been proposed, with a purpose of reducing the friction loss between the aluminum piston and the aluminum cylinder (for example, Patent Document 1).

### CITATION LIST

### PATENT LITERATURE

[Patent Document 1] Japanese Laid-Open Patent Publication No. 11-324793

However, when resin coating is provided, heat is less likely to be transmitted from the piston skirt to the cylinder wall than in the case where metal plating is provided. This hinders discharge of heat from the aluminum piston to the aluminum cylinder, and thus the aluminum piston tends to increase in temperature. In particular, an internal combustion engine for a motorcycle, although used in high-rotation region, has a lower cooling ability than does an internal combustion engine for a four-wheeled automobile; therefore, its piston is likely to reach high temperatures. Since the strength of an aluminum alloy is likely to decrease at high temperatures, the fear of a temperature increase in aluminum pistons makes it difficult to adopt resin coating for the piston skirt.

A piston, designed to be as light as possible, has a relatively small thermal capacity. Therefore, one approach to suppressing temperature increase in a piston may be to increase the thickness of the whole or a part of the piston skirt to attain increased thermal capacity. However, such a construction mitigates the advantage of weight reduction that is provided by the use of an aluminum alloy as the piston material.

Thus, in an internal combustion engine including an aluminum piston and an aluminum cylinder, it is difficult to simultaneously attain reduction in friction loss by resin coating and suppression of temperature increase in the piston.

The present invention has been made in view of the aforementioned problems, and an objective thereof is to reduce friction loss between a piston skirt and a cylinder wall in an internal combustion engine including an aluminum piston and an aluminum cylinder, and also suppress temperature increase in the aluminum piston. According to the present invention said object is solved by an internal combustion engine for straddled vehicles having the features of independent claim 1. Preferred embodiments are laid down in the dependent claims.

An internal combustion engine for straddled vehicles according to an embodiment of the present invention comprises: a cylinder made of an aluminum alloy, the cylinder having a cylinder wall which defines a cylinder bore; a piston made of an aluminum alloy, the piston being accommodated in the cylinder bore and being capable of reciprocating in a first direction which is parallel to a cylinder axis and in a second direction which is opposite to the first direction; and a cylinder head at an end of the cylinder bore in the first direction, the cylinder head defining a combustion chamber together with the cylinder wall and the piston, wherein, the piston includes a piston head which defines an end of the combustion chamber in the second direction, and a piston skirt extending in the second direction from an outer periphery of the piston head; an outer peripheral surface of the piston skirt is at least partially coated with a resin; the piston skirt has fiber flow lines; and the piston skirt is divided into a pair of skirt sections positioned so that the cylinder axis is interposed therebetween along a radial direction.

In one embodiment, a length L of the piston skirt along the second direction and a diameter D of the cylinder bore satisfy the relationship L/D≧0.3.

In one embodiment, the piston skirt lacks any protrusion to serve as a reference for processing.

In one embodiment, the piston is made of an aluminum alloy containing Cu in an amount of not less than 3.0 mass% and not more than 5.5 mass%.

In one embodiment, the piston is made of an aluminum alloy containing Fe in an amount of not less than 0.1 mass% and not more than 1.0 mass%.

In one embodiment, the piston includes a pair of piston bosses; and, when one of the pair of skirt sections is viewed in such a manner that the one skirt section appears to overlap the cylinder axis, ends of the pair of piston bosses are located outside of the one skirt section along a radial direction.

A straddled vehicle according to an embodiment of the present invention comprises an internal combustion engine for straddled vehicles of the above construction.

Hereinafter, the operation and effect of the present invention will be described.

In an internal combustion engine according to an embodiment of the present invention, the outer peripheral surface of the piston skirt is at least partially coated with a resin, whereby friction loss between the aluminum piston and the aluminum cylinder can be reduced. Moreover, the piston skirt of the piston being made of an aluminum alloy has fiber flow lines. In other words, a piston which is shaped by forging (forged piston) is used. Since a forged piston has fiber flow lines created in its metallographical structure, it has a relatively high proof stress. Therefore, a wide elastic region (i.e., a stress range which is liable to deformation without involving plastic deformation) with respect to lateral pressure (i.e., a reaction force from the cylinder wall) can be secured, thus allowing a construction to be adopted in which the piston skirt is separated into a pair of skirt sections which are positioned so that the cylinder axis is interposed therebetween along a radial direction (i.e., the piston skirt is peripherally divided). Such a construction allows the piston skirt to be deformed in a manner of attaining tight contact with the cylinder wall, when pressed against the cylinder wall. This creates a large area of contact between the piston skirt and the cylinder wall, thus allowing for an increased amount of heat released from the piston skirt to the cylinder wall. Therefore, even if the aluminum piston is designed to be so light that it has a small thermal capacity, its cooling efficiency can be enhanced, so that the piston is unlikely to reach a high temperature. On the other hand, the outer peripheral surface of the piston skirt is at least partially coated with a resin, whereby increase in friction loss is suppressed even when the area of contact between the piston skirt and the cylinder wall is large. Thus, according to an embodiment of the present invention, while sufficiently attaining an advantage of weight reduction based on the use of an of aluminum alloy, it is possible to reconcile the effect of reduction in friction loss by resin coating and suppression of temperature increase in the piston.

As the ratio of the length **L** of the piston skirt along the second direction (i.e., a direction which is parallel to the cylinder axis and heads from the cylinder head toward the crankcase) to the diameter **D** of the cylinder bore increases, the piston skirt becomes more likely to deform, thus adding to the area of contact between the piston skirt and the cylinder wall. More specifically, the length **L** of the piston skirt along the second direction and the diameter **D** of the cylinder bore satisfy the relationship L/D ≧0.3. Generally speaking, the length of the piston skirt is set as short as possible in order to reduce frictional drag; therefore, purposely adopting a design that satisfies the relationship L/D ≧ 0.3 is beyond ordinary thoughts of those skilled in the art.

In an internal combustion engine according to an embodiment of the present invention, a forged piston is used as the piston, so that the piston skirt does not need to have any protrusion to serve as a reference for processing (i.e., a reference point for processing purposes). The portion(s) of the piston skirt where the reference point(s) for processing purposes has been formed is thicker than any other portion; thus, the piston skirt is rendered less prone to deformation when the piston skirt has a reference point(s) for processing purposes. In other words, since the piston skirt lacks any reference point for processing purposes, the piston skirt is more likely to deform than a piston skirt that has a reference point(s) for processing purposes.

The aluminum alloy being the material of the piston preferably contains Cu. By adding Cu to the aluminum alloy, it becomes possible to enhance the effect of age hardening, and the matrix is strengthened, whereby the high-temperature strength can be improved. The Cu content in the aluminum alloy is preferably 3.0 mass% or more. When the Cu content in the aluminum alloy is 3.0 mass% or more, the Ni and Fe contents can be made sufficiently small. While Ni and Fe may be added to the aluminum alloy in order to improve the high-temperature strength, Ni is relatively expensive; thus, a greater Ni content may increase the production cost. On the other hand, a greater Fe content may allow spiculae to appear, or increase the need for providing better cooling equipment for restraining spiculae from appearing. Moreover, the Cu content in the aluminum alloy is preferably 5.5 mass% or less. Although Cu is a relatively heavy element, the Cu content in the aluminum alloy being 5.5 mass% or less serves to restrain the piston from becoming too heavy.

The aluminum alloy being the material of the piston preferably contains Fe. By adding Fe to the aluminum alloy, it becomes possible to improve the high-temperature strength. Preferably, the Fe content in the aluminum alloy is 0.1 mass% or more. The Fe content in the aluminum alloy being 0.1 mass% or more provides a sufficient effect of improving the high-temperature strength. Moreover, the Fe content in the aluminum alloy is preferably 1.0 mass% or less. The Fe content in the aluminum alloy being 1.0 mass% or less makes it possible to restrain spiculae from appearing, or relatively simplify the cooling equipment for restraining spiculae from appearing.

When at least one of the pair of skirt sections is viewed in such a manner that it appears to overlap the cylinder axis, preferably, the ends of the pair of piston bosses are located outside of the skirt section along a radial direction. When such a construction is adopted, the skirt section has a small length along its peripheral direction (i.e., the skirt section is thin in width), thus allowing the skirt section to achieve tight contact with the cylinder wall more easily.

An internal combustion engine according to an embodiment of the present invention is suitably used in a straddled vehicle.

### ADVANTAGEOUS EFFECTS OF INVENTION

According to an embodiment of the present invention, it is possible to reduce friction loss between a piston skirt and a cylinder wall in an internal combustion engine including an aluminum piston and an aluminum cylinder, and also suppress temperature increase in the aluminum piston.

### BRIEF DESCRIPTION OF DRAWINGS

[FIG. 1] A cross-sectional view schematically showing an internal combustion engine 100 according to an embodiment of the present invention.
[FIG. 2] (a) is an upper plan view schematically showing a piston 40 which is included in the internal combustion engine 100; (b) and (c) are side views schematically showing the piston 40; and (d) is a lower plan view schematically showing the piston 40.
[FIG. 3] (a) and (b) are schematic cross-sectional views of the internal combustion engine 100, where (a) shows a state immediately before the top dead center, and (b) shows a state immediately after the top dead center.
[FIG. 4] (a) is a diagram schematically showing fiber flow lines **F** in a piston head **41** of a piston **40;** and (b) is a diagram schematically showing fiber flow lines **F** in a piston skirt **42** of a piston **40.**
[FIG. 5] A diagram, which is a cross-sectional view taken along line **5A-5A'** in FIG. 2(c), showing a cross-sectional structure of a piston skirt **42** of a piston **40.**
[FIG. 6] A graph showing tensile strength at 150°C, 0.2% proof stress, and fatigue strength of forged pieces (#1 and #2) and a cast piece (#3) of an aluminum alloy.
[FIG. 7] (a) and (b) are diagrams showing analysis results, by computer simulation, of an area of contact between a first skirt section (a skirt section on the thrust side) **42a** and a cylinder wall 12 during operation of the internal combustion engine 100.
[FIG. 8] (a) and (b) are plan views showing exemplary layouts of a resin layer rl on the outer peripheral surface of the piston skirt **42.**
[FIG. 9] (a) and (b) are diagrams schematically showing other examples of fiber flow lines **F** in the piston **40.**
[FIG. 10] (a) and (b) are diagrams schematically showing other examples of fiber flow lines **F** in the piston **40.**
[FIG. 11] A side view schematically showing a straddled vehicle (motorcycle) **200** having an internal combustion engine (engine) **100.**

### DESCRIPTION OF EMBODIMENTS

Hereinafter, embodiments of the present invention will be described with reference to the drawings. Note that the present invention is not limited to the following embodiments.

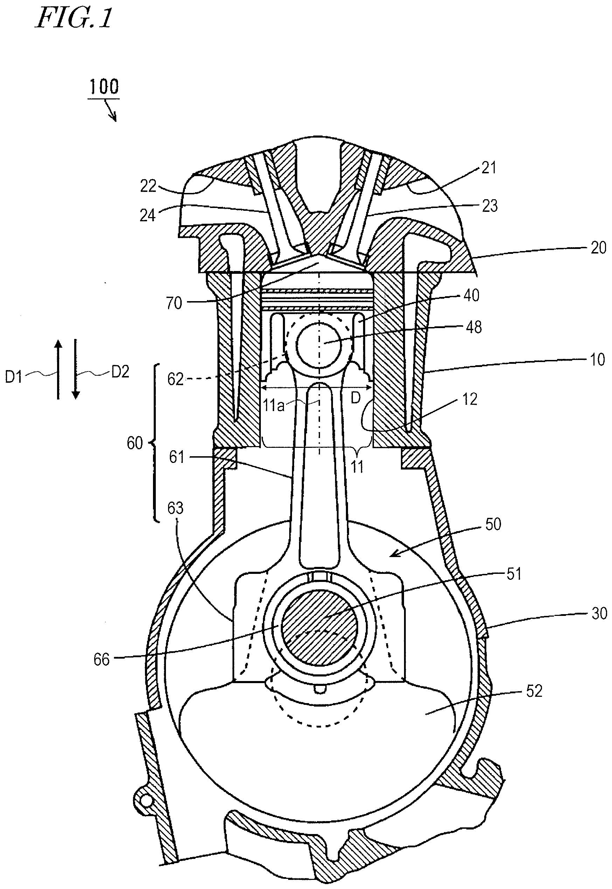

FIG. 1 shows an internal combustion engine (engine) 100 according to an embodiment of the present invention. FIG. 1 is a cross-sectional view schematically showing the internal combustion engine **100.**

As shown in FIG. 1, the internal combustion engine **100** includes a cylinder (cylinder block) **10,** a cylinder head **20,** and a crankcase **30.** The internal combustion engine **100** further includes a piston **40,** a crankshaft **50,** and a connecting rod **60.**

The cylinder **10** has a cylinder wall **12** defining a cylinder bore **11.** In the present specification, two directions **D1** and **D2** which are parallel to a cylinder axis 11a (i.e., the center line of the cylinder bore **11)** are respectively referred to as a "first direction" and a "second direction". The first direction **D1** is a direction heading from the crankcase **30** toward the cylinder head **20** (i.e., a direction from the bottom to the top in the figure), whereas the second direction **D2** is a direction heading from the cylinder head **20** toward the crankcase **30** (i.e., a direction from the top to the bottom in the figure). In other words, the second direction **D2** is the opposite direction of the first direction **D1.** The cylinder **10** is made of an aluminum alloy.

The cylinder head **20** is provided at an end of the cylinder bore **11** in the first direction **D1.** Together with the cylinder wall **12** and the piston **40,** the cylinder head **20** defines a combustion chamber **70.** The cylinder head **20** has an intake port **21** through which to introduce fuel into the combustion chamber **70,** and an exhaust port **22** through which to discharge exhaust gas from the combustion chamber **70.** An intake valve **23** is provided in the intake port **21,** whereas an exhaust valve **24** is provided in the exhaust port **22.**

The crankcase **30** is provided on the opposite side of the cylinder **10** from the cylinder head **20.** The crankcase **30** may be separate from the cylinder **10,** or constitute an integral piece with the cylinder **10.**

The piston **40** is accommodated within the cylinder bore **11.** The piston **40** is provided so as to be capable of reciprocating in the cylinder bore **11** along the first direction **D1** and the second direction **D2.** The piston **40** is made of an aluminum alloy.

The crankshaft **50** is accommodated in the crankcase **30.** The crankshaft **50** includes a crankpin **51** and a crank arm **52.**

The connecting rod **60** includes a bar-like rod main body **61,** a small end **62** provided at one end of the rod main body **61,** and a big end **63** provided at another end of the rod main body **61.** The connecting rod **60** connects the piston **40** with the crankshaft **50.** Specifically, the piston pin **48** of the piston **40** is inserted in a throughhole (piston pin hole) of the small end 62, and the crankpin 51 of the crankshaft 50 is inserted in a throughhole (crankpin hole) of the big end 63, whereby the piston 40 and the crankshaft 50 are linked. A bearing 66 is provided between the inner peripheral surface of the big end 63 and the crankpin 51.

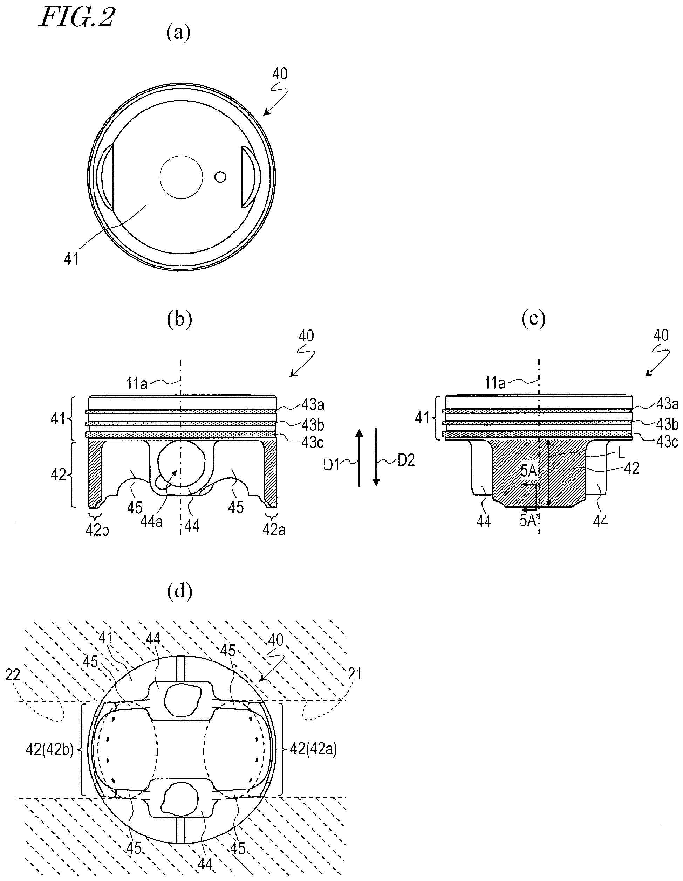

Next, with reference to FIGS. 2(a) to (d), the structure of the piston 40 which is included in the internal combustion engine 100 will be described more specifically. FIG. 2(a) is an upper plan view schematically showing the piston 40. FIGS. 2(b) and (c) are side views schematically showing the piston 40. FIG. 2(b) is a view of the piston 40 as observed in the axial direction of the piston pin 48 (see FIG. 1) (hereinafter referred to as the "piston pin axial direction"), whereas FIG. 2(c) is a view of the piston 40 as observed in a direction which is perpendicular to the piston pin axial direction. FIG. 2(d) is a lower plan view schematically showing the piston 40.

As shown in FIGS. 2(a) to (d), the piston 40 includes a piston head 41, a piston skirt 42, and piston rings 43a, 43b and 43c. Moreover, the piston 40 includes a pair of piston pin bosses 44 having piston pin holes 44a in which the piston pin 48 (see FIG. 1) is to be inserted, and ribs 45 which link the piston pin bosses 44 and the piston skirt 42 together.

The piston head 41 defines an end of the combustion chamber 70 in the second direction D2. On the outer periphery of the piston head **41**, ring grooves in which to retain the piston rings **43a**, **43b** and **43c** are formed.

In the second direction D2 from the outer periphery of the piston head 41, the piston skirt 42 extends along the cylinder wall 12. During operation of the internal combustion engine 100, the piston skirt 42 slides against the cylinder wall 12.

The piston skirt 42 is divided into a pair of skirt sections 42a and 42b, which are positioned so that the cylinder axis 11a is interposed therebetween along a radial direction. In other words, the piston skirt 42 is peripherally divided. As shown in FIG. 2(d), one (which hereinafter will be referred to as the "first skirt section") 42a of the pair of skirt sections **42a** and **42b** at least partially overlaps the intake port **21** as viewed in the first direction **D1.** Moreover, the other (hereinafter referred to as the "second skirt section") **42b** at least partially overlaps the exhaust port **22** as viewed in the first direction **D1.**

The piston rings **43a, 43b** and **43c** are attached at the outer periphery of the piston head **41.** Although a construction is illustrated herein in which the piston 40 includes three piston rings **43a, 43b** and **43c,** the number of piston rings is not limited to three. Among the three piston rings **43a, 43b** and **43c,** for example, the upper and middle piston rings (i.e., the top ring and the second ring) **43a** and **43b** are compression rings for keeping the combustion chamber **70** airtight, while the lower piston ring (third ring) 43c is an oil ring to scrape off the excess oil adhering to the cylinder wall **12.**

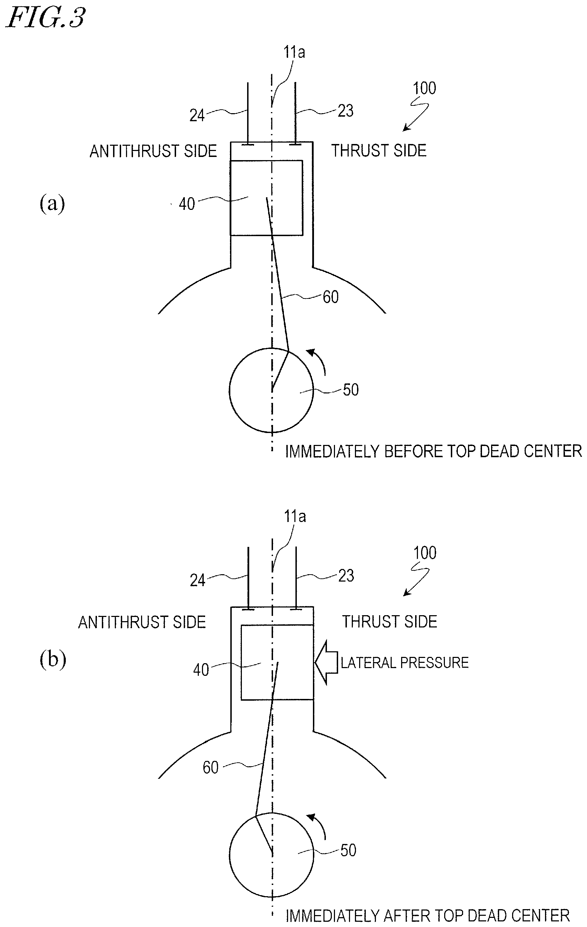

Now, with reference to FIGS. **3(a)** and **(b),** the "thrust side" and the "antithrust side" of the internal combustion engine **100** will be described. FIGS. **3(a)** and **(b)** are schematic cross-sectional views of the internal combustion engine **100.** In FIGS. **3(a)** and **(b),** the crankshaft **50** rotates counterclockwise. FIG. **3(a)** illustrates a state immediately before the top dead center, whereas FIG. **3(b)** illustrates a state immediately after the top dead center.

With a pressure that acts on the connecting rod **60** and the piston **40,** the piston **40** is pressed to the right or the left of the cylinder wall **12.** As shown in FIG. **3(a)****,** when the piston **40** goes up toward the top dead center, the piston **40** is being pressed to the left of the cylinder wall **12.** On the other hand, as shown in FIG. **3(b)****,** once the piston **40** has passed the top dead center, the direction in which the connecting rod **60** is inclined changes (i.e., immediately before the top dead center, the connecting rod **60** is inclined so that the small end **62** is situated to the left of the big end **63;** immediately after the top dead center, the connecting rod **60** is inclined so that the big end **63** is situated to the left of the small end **62).** This causes the piston **40** to move from left to right, so that the piston **40** is pressed to the right of the cylinder wall **12.** The right side, where the piston **40** receives a thrust (lateral pressure) from the cylinder wall 12 at this time, is referred to as the "thrust side"; and the left side is referred to as the "antithrust side".

Herein, the thrust side and the antithrust side are set so that the first skirt section **42a** overlapping the intake port **21** is located on the thrust side, and that the second skirt section **42b** overlapping the exhaust port **22** is located on the antithrust side. It will be appreciated that the exact manner of setting the thrust side and the antithrust side of the piston **40** is not limited to this example. The thrust side and the antithrust side of the piston **40** are determined by the direction of rotation of the connecting rod **60** that is set in each given internal combustion engine.

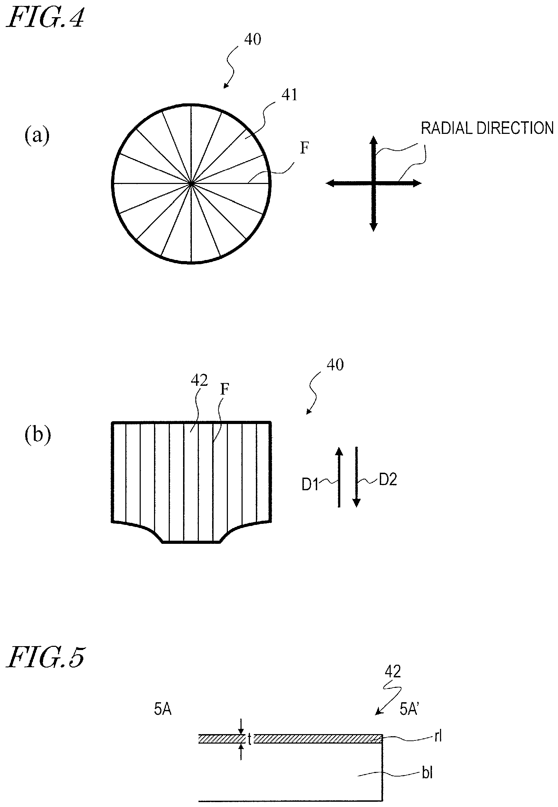

In the present embodiment, the piston skirt **42** has fiber flow lines. In other words, the piston **40** is a piston that has been formed through forging (forged piston). FIGS. 4(a) and **(b)** schematically show fiber flow lines **F** in the forged piston **40.** Note that each fiber flow line **F** shown in the figure is a schematic representation of what is actually a countless number of fiber flow lines. Fiber flow lines **F** are formed in the piston head **41** as shown in FIG. **4(a)****,** whereas fiber flow lines **F** are formed in the piston skirt 42 as shown in FIG. **4(b)****.**

In the present embodiment, the outer peripheral surface of the piston skirt **42** is at least partially coated with a resin (i.e., it has a resin layer). In FIGS. **2(b)** and (c), the resin-coated region is shown hatched. In the example shown in FIGS. **2(b)** and **(c)**, substantially the entire outer peripheral surface of the piston skirt **42** has a resin coating.

FIG. **5** shows a cross-sectional structure of the piston skirt **42.** FIG. **5** is a cross-sectional view taken along line **5A-5A'** in FIG. **2(c)****.** As shown in FIG. **5****,** a resin layer **rl** is formed on a base **bl** which is made of an aluminum alloy. For example, the resin layer **rl** may contain a polymer matrix and solid lubricating particles which are dispersed in the polymer matrix. As the material of the polymer matrix, for example, a thermosetting polyamide-imide may be suitably used, although this is not a limitation. Various known solid lubricating particles can be used as the solid lubricating particles; for example, graphite particles and molybdenum particles can be suitably used. The resin layer **rl** can be formed by applying a resin material in liquid form onto the piston skirt **42** by a spraying method or various printing methods (e.g., a screen printing technique or a pad printing technique), for example. The resin layer rl as such, being formed on at least a portion of the outer peripheral surface of the piston skirt **42,** allows the friction loss between the piston **40** and the cylinder wall **12** to be reduced.

As described above, a piston which is shaped by forging (i.e., a forged piston) **40** is used in the internal combustion engine **100** according to an embodiment of the present invention. Since the forged piston **40** has fiber flow lines created in its metallographical structure, it has a relatively high proof stress. Therefore, a wide elastic region (i.e., a stress range which is liable to deformation without involving plastic deformation) with respect to lateral pressure (i.e., a reaction force from the cylinder wall **12)** can be secured.

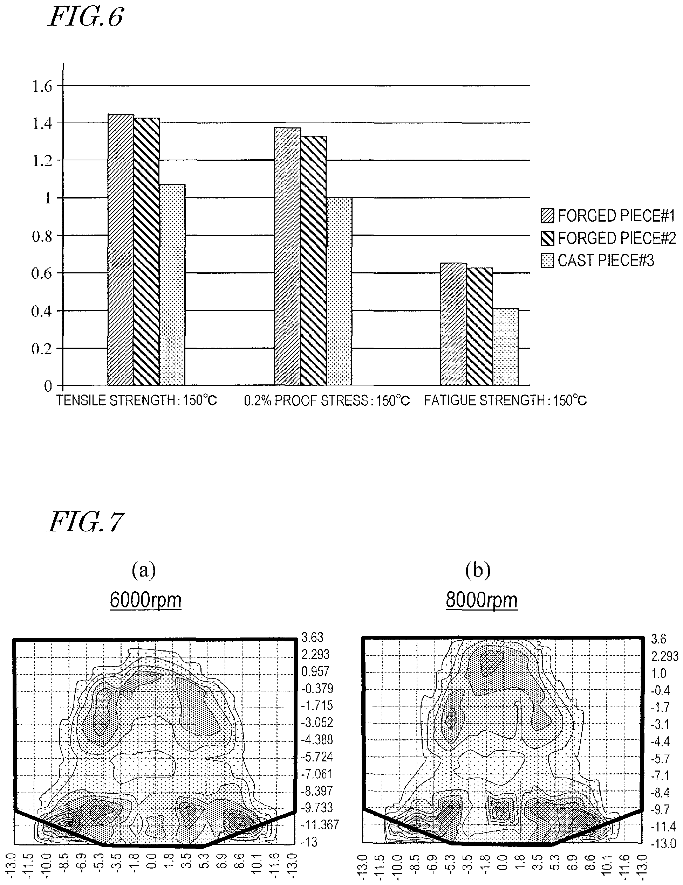

FIG. **6** shows tensile strength at 150°C, 0.2% proof stress, and fatigue strength of forged pieces (#1 and #2) and a cast piece (#3) of an aluminum alloy. FIG. **6** indicates relative values based on the 0.2% proof stress of cast piece #3 being defined as 1.

It can be said that the elastic region becomes broader as the 0.2% proof stress is larger. As shown in FIG. 6, the 0.2% proof stresses of forged pieces #1 and #2 are greater than the 0.2% proof stress of cast piece #3. As can be seen from this, aluminum-alloy forged pieces #1 and #2 have broader elastic regions than does aluminum-alloy cast piece #3. Moreover, as is shown in FIG. **6****,** the tensile strengths of forged pieces #1 and #2 are greater than the tensile strength of cast piece #3, and the fatigue strengths of forged pieces #1 and #2 are greater than the fatigue strength of cast piece #3. Thus, a forged piece of an aluminum alloy is superior in mechanical properties to a cast piece of an aluminum alloy. This emanates from its textural superiorities, e.g., fiber flow lines being created in the metallographical structure and the absence of any mixed air.

Moreover, in the forged piston 40, elements to be added to the aluminum alloy as its material may have wide ranges of contents. On the other hand, in the case of a piston which is shaped by casting (i.e., a cast piston), the aluminum alloy needs to be once made into a melt, and this restricts the content of any added element; moreover, it is also difficult to achieve high proof stress via adjustment of the composition. Thus, the forged piston **40** also has compositional advantages over a cast piston.

Moreover, since the forged piston **40** provides a higher freedom of shape than a cast piston, thus allowing a construction to be adopted in which the piston skirt **42** is likely to deform. Specifically, a construction in which the piston skirt **42** is peripherally divided into a pair of skirt sections **42a** and **42b,** as in the present embodiment, may be adopted. Such a construction allows the piston skirt **42** to be deformed in a manner of attaining tight contact with the cylinder wall **12,** when pressed against the cylinder wall **12.** This creates a large area of contact between the piston skirt **42** and the cylinder wall **12,** thus allowing for an increased amount of heat released from the piston skirt **42** to the cylinder wall **12.** Therefore, even if the piston **40** is an aluminum piston which is designed to be so light that it has a small thermal capacity, its cooling efficiency can be enhanced, so that the piston **40** is unlikely to reach a high temperature. Moreover, the forged piston **40** having a high freedom of shape allows the piston skirt **42** to be made thin (e.g., to a thickness 3 mm or less), which also allows for deformation of the piston skirt **42.** On the other hand, in the case of a cast piston, a construction which results in high piston skirt rigidity (e.g., a construction in which the piston skirt is not peripherally divided, or a thick construction) needs to be adopted in order to compensate for textural and compositional disadvantages, which makes the piston skirt less prone to deformation. Therefore, use of a cast piston will result in deviated contact between the piston skirt and the cylinder wall, thus making it difficult to create a sufficiently large area of contact.

Furthermore, in the internal combustion engine 100 according to an embodiment of the present invention, the outer peripheral surface of the piston skirt **42** is at least partially coated with a resin, whereby increase in friction loss is suppressed even when the area of contact between the piston skirt **42** and the cylinder wall **12** is large.

Thus, according to an embodiment of the present invention, while sufficiently attaining an advantage of weight reduction based on the use of an aluminum alloy, it is possible to reconcile the effect of reduction in friction loss by resin coating and suppression of temperature increase in the piston **40.**

FIG. **7** shows analysis results, by computer simulation, of an area of contact between the first skirt section (i.e., the skirt section which receives a thrust from the cylinder wall 12) **42a** and the cylinder wall **12** during operation of the internal combustion engine **100.** FIG. **7** shows a region of the first skirt section **42a** that came into contact with the cylinder wall **12** during one cycle. FIG. **7(a)** shows a case where the number of revolutions is 6000 rpm, and FIG. **7(b)** shows a case where the number of revolutions is 8000 rpm.

As can be seen from FIGS. **7(a)** and **(b),** there is a relatively large area of contact between the first skirt section **42a** and the cylinder wall **12.**

As the ratio of the length L of the piston skirt **42** along the second direction **D2** (see FIG. **2(c)****)** to the diameter **D** of the cylinder bore **11** (see FIG. 1) increases, the piston skirt **42** becomes more likely to deform, thus adding to the area of contact between the piston skirt **42** and the cylinder wall **12.** More specifically, it is preferable that the length L of the piston skirt **42** along the second direction **D2** and the diameter **D** of the cylinder bore **11** satisfy the relationship L/D≧0.3. Generally speaking, the length of the piston skirt is set as short as possible in order to reduce frictional drag; therefore, purposely adopting a design that satisfies the relationship L/D ≧ 0.3 is beyond ordinary thoughts of those skilled in the art.

Moreover, in the case of the forged piston **40,** the piston skirt **42** does not need to have any protrusion to serve as a reference for processing (i.e., a reference point for processing purposes). Therefore, as compared to a cast piston, it is easy to make the entire piston skirt 42 thin. On the other hand, in the case of a cast piston, a reference point(s) for processing purposes needs to be formed on the piston skirt, and the portion(s) of the piston skirt where the reference point(s) for processing purposes has been formed is thicker than any other portion; thus, the piston skirt is rendered less prone to deformation.

There is no particular limitation as to the composition of the aluminum alloy being the material of the forged piston **40,** and various known aluminum alloys may be used.

Preferably, the aluminum alloy being the material of the piston **40** contains Cu. By adding Cu to the aluminum alloy, it becomes possible to enhance the effect of age hardening, and the matrix is also strengthened, whereby the high-temperature strength can be improved.

The Cu content in the aluminum alloy is preferably 3.0 mass% or more. When the Cu content in the aluminum alloy is 3.0 mass% or more, the Ni and Fe contents can be made sufficiently small. While Ni and Fe may be added to the aluminum alloy in order to improve the high-temperature strength, Ni is relatively expensive; thus, a greater Ni content may increase the production cost. On the other hand, a greater Fe content may allow spiculae to appear, or increase the need for providing better cooling equipment for restraining spiculae from appearing.

Moreover, the Cu content in the aluminum alloy is preferably 5.5 mass% or less. Although Cu is a relatively heavy element, the Cu content in the aluminum alloy being 5.5 mass% or less serves to restrain the piston from becoming too heavy.

Moreover, the aluminum alloy being the material of the piston **40** preferably contains Fe. By adding Fe to the aluminum alloy, it becomes possible to improve the high-temperature strength.

Preferably, the Fe content in the aluminum alloy is 0.1 mass% or more. The Fe content in the aluminum alloy being 0.1 mass% or more provides a sufficient effect of improving the high-temperature strength.

Moreover, the Fe content in the aluminum alloy is preferably 1.0 mass% or less. The Fe content in the aluminum alloy being 1.0 mass% or less makes it possible to restrain spiculae from appearing, or relatively simplify the cooling equipment for restraining spiculae from appearing.

When at least one of the pair of skirt sections **42a** and **42b** is viewed in such a manner that it appears to overlap the cylinder axis **11a,** preferably, the ends of the pair of piston bosses **44** are located outside of the skirt section **(42a** and/or **42b)** along a radial direction, as shown in FIG. **2(c)****.** When such a construction is adopted, the skirt section **(42a** and/or **42b)** has a small length along its peripheral direction (i.e., the skirt section is thin in width), thus allowing the skirt section **(42a** and/or **42b)** to achieve tight contact with the cylinder wall **12** more easily.

Although FIGS. **2(b)** and **(c)** illustrate a construction where substantially the entire outer peripheral surface of the piston skirt **42** has a resin coating (i.e., a resin layer **rl** is formed on substantially the entire outer peripheral surface of the piston skirt **42),** the resin layer rl does not need to be formed on substantially the entire outer peripheral surface of the piston skirt **42,** but may be formed only on a part of the outer peripheral surface.

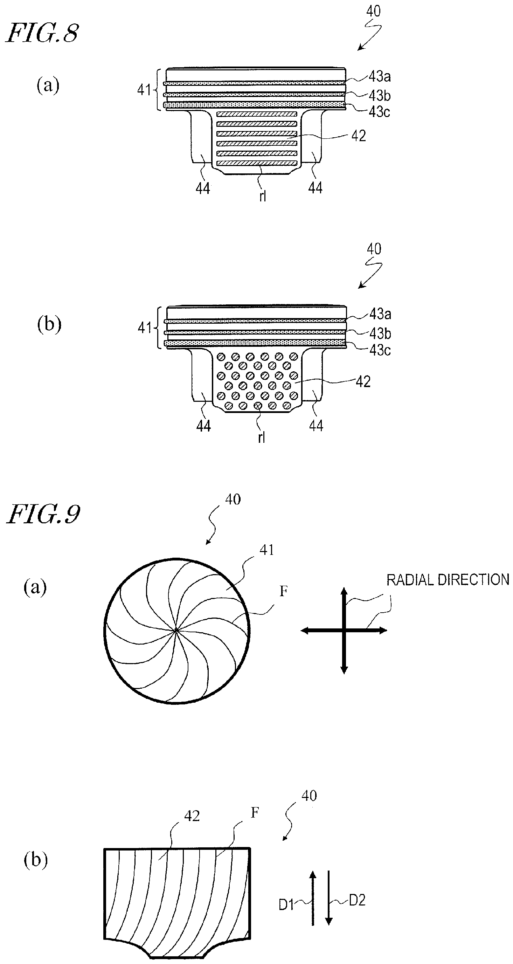

FIGS. **8(a)** and **(b)** show other exemplary layouts of a resin layer **rl** on the outer peripheral surface of the piston skirt **42.**

In the examples shown in FIGS. **8 (a)** and **(b)****,** a resin layer **rl** is formed on portions of the outer peripheral surface of the piston skirt **42.** In other words, the outer peripheral surface of the piston skirt **42** includes regions where the resin layer **rl** is not formed. More specifically, in the example shown in FIG. **8(a)****,** the resin layer **rl** is formed in a plurality of strips (linear shapes) extending along the peripheral direction; and, in the example shown in FIG. **8(b)****,** the resin layer **rl** is formed in a plurality of dots. Adopting the layouts shown in FIGS. **8(a)** and **(b)** will also allow similar effects to be obtained.

Although there is no particular limitation as to the thickness t of the resin layer rl (see FIG. 5), from the standpoint of sufficiently lowering friction loss of the piston skirt **42,** it is preferable that the thickness t of the resin layer **rl** is 15 µm or more. However, if the thickness t of the resin layer **rl** exceeds 30 µm, it may become difficult to use a simple formation method. Therefore, from the standpoint of facilitating the formation of the resin layer **rl,** the thickness t of the resin layer **rl** is preferably 30 µm or less.

Note that the fiber flow lines **F** in the piston **40** are not limited to the examples shown in FIGS. **4(a)** and (b). In the example shown in FIG. **4(a)****,** the fiber flow lines F in the piston head **41** run parallel to the radial direction, as viewed from above the piston **40** (i.e., from the side of the combustion chamber **70).** More specifically, the fiber flow lines **F** extend radially from the center axis of the piston **40,** and each of them is in a linear shape. In the example shown in FIG. **4(b)****,** the fiber flow lines **F** in the piston skirt **42** are parallel to the first direction **D1** and the second direction **D2** (which may hereinafter be collectively referred to as the "sliding direction"), and each of them is in a linear shape.

FIGS. **9(a)** and **(b)** show other examples of fiber flow lines **F** in the piston **40.** In the example shown in FIG. **9(a)****,** the fiber flow lines **F** in the piston head **41** are not parallel to but inclined from the radial direction, as viewed from above the piston **40** (i.e., from the side of the combustion chamber **70).** More specifically, the fiber flow lines F have arc shapes rather than being linear-shaped, and are swirling around the center axis of the piston **40.** In the example shown in FIG. **9(b)****,** the fiber flow lines **F** in the piston skirt **42** are not parallel to but are inclined from the first direction **D1** and the second direction **D2** (sliding direction).

As shown in FIGS. **9(a)** and **(b)**, when the fiber flow lines **F** in the piston head **41** are inclined from the radial direction and the fiber flow lines **F** in the piston skirt **42** are inclined from the sliding direction, good strength and fatigue resistance are obtained, as is described in Japanese Laid-Open Patent Publication No. 2008-36710.

Note that the examples shown in FIGS. **9(a)** and **(b)** are not limiting in terms of how much the fiber flow lines **F** in the piston head **41** are inclined from the radial direction, or how much the fiber flow lines **F** in the piston skirt 42 are inclined from the sliding direction.

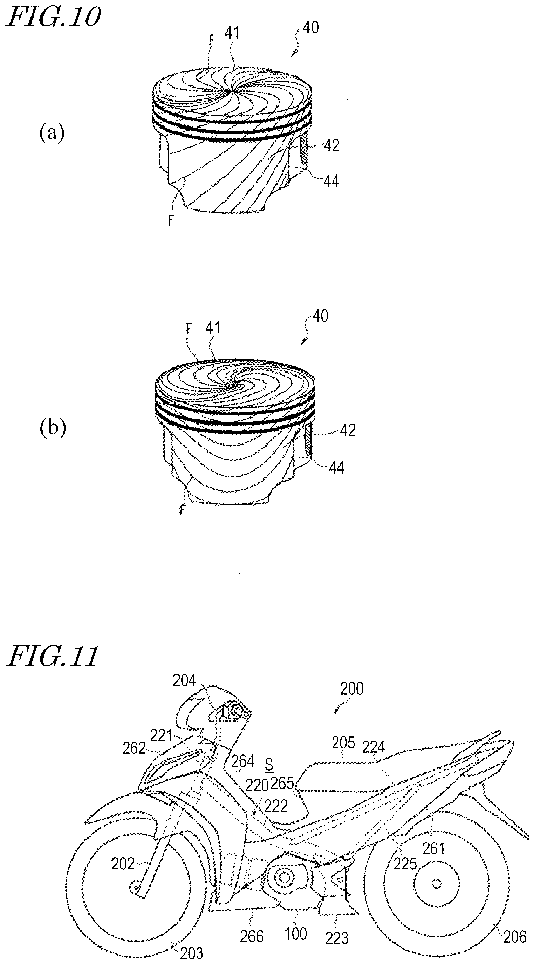

For example, as shown in FIG. **10(a)****,** the fiber flow lines **F** may be inclined from the radial direction or the sliding direction to a greater extent. From the standpoints of providing improved strength and fatigue resistance, it is preferable that the fiber flow lines F have a large angle of inclination with respect to the radial direction or the sliding direction. Specifically, the angle of inclination of the fiber flow lines **F** with respect to the radial direction or the sliding direction is preferably not less than 10° and less than 90°.

Still another example of fiber flow lines **F** is shown in FIG. **10(b)****.** In the example shown in FIG. **10(b)****,** the fiber flow lines **F** in the piston skirt **42** first extend obliquely from the top toward the bottom of the piston **40,** and then turn around and obliquely extend from the bottom toward the top. Such fiber flow lines **F** are also inclined from the sliding direction, and therefore can attain similar effects.

The forged piston **40** in which the fiber flow lines **F** are inclined from the radial direction or the sliding direction can be produced by a technique which is described in Japanese Laid-Open Patent Publication No. 2008-36710. For example, a step of twisting the aluminum alloy workpiece may be performed before the forging step, thus to incline the fiber flow lines **F** with respect to the radial direction or the sliding direction.

The internal combustion engine **100** according to an embodiment of the present invention is suitably used in a straddled vehicle. FIG. **11** shows a straddled vehicle **200** including the internal combustion engine **100** according to an embodiment of the present invention. The straddled vehicle **200** shown in FIG. **11** is a motorcycle of underbone type. FIG. **11** is a side view schematically showing the motorcycle **200.**

As shown in FIG. **11****,** a body frame **220** of the motorcycle **200** has a head pipe **221** provided at its front end. A steering shaft is inserted in the head pipe **221.** The steering shaft is rotatably supported. The lower end of the steering shaft is linked to the front forks **202.** The front wheel **203** is supported at the lower ends of the front forks **202.** The upper end of the steering shaft is linked to the steering section **204.**

Moreover, the body frame **220** includes a front frame section **222** which extends rearward and obliquely downward from the head pipe **221** to constitute a front portion of the body frame **220.** Along the vehicle width direction, the front frame section **222** is placed in the middle.

A seat **205** is provided rearward of the steering section **204.** The seat **205** is a tandem seat. The rear portion of the seat **205** for a passenger to sit on is made higher than the front portion of the seat **205** for a rider to sit on. As has already been described, the motorcycle **200** shown in FIG. **11** is an underbone type, such that a predetermined space S is created above the front frame section **222** and between the steering section **204** and the seat **205.**

An internal combustion engine (engine) **100** is provided below the front frame section **222.** The body frame **220** includes a rear bracket **223** that extends downward from the rear end of the front frame section **222.** The rear bracket **223** is located behind the engine **100.** The engine **100** is supported by the front frame section **222** and the rear bracket **223.** A rear wheel **206** is disposed rearward of the engine **100** and the rear bracket **223.** The wheel shaft of the rear wheel **206** is supported by a swing arm (not shown) that extends rearward from the rear bracket **223.**

The body frame **220** further includes a pair of (right and left) rear frame sections **224.** The front ends of the rear frame sections **224** are connected to a rear portion of the front frame section **222.** The rear frame sections **224** are connected at positions which are located above the crankcase **30** of the engine **100.** The rear frame sections **224** extend rearward and obliquely upward from their front ends to constitute a rear portion of the body frame **220.** The body frame **220** includes a stay **225** which extends from the rear end of the front frame section **222** toward a middle of the rear frame sections **224** to support the rear frame sections **224.**

A body cover of the motorcycle **200** includes a pair of side cover portions **261.** Moreover, the body cover includes a front cover portion **262,** a center cover portion **264,** an underseat cover portion **265,** and an underengine cover portion **266.**

The pair of side cover portions **261** are disposed along the rear frame sections **224,** so as to provide covering on the outer sides of the rear frame sections **224** along the vehicle width direction. An upper portion of the front cover portion **262** provides covering in front of the head pipe **221.** The right and left side portions of the front cover portion **262** provide covering on the right side and the left of the body front.

The uppermost portion of the center cover portion **264** provides covering behind the head pipe **221.** From its uppermost portion, the center cover portion **264** extends downward and rearward along the front frame section **222,** so as to provide covering above the front frame section **222.**

The underseat cover portion **265** is disposed below the seat **205** so as to cover a container box (not shown) which is disposed below the seat **205.** The underengine cover portion **266** covers the front portion of the engine **200.**

Since the motorcycle **200** having the aforementioned construction includes the engine (internal combustion engine) **100** according to an embodiment of the present invention, it permits early suppression of the noise that occurs immediately after start of the internal combustion engine **100,** and also prevents wear and seizing of the piston and the cylinder wall.

Note that the engine **100** according to an embodiment of the present invention may also be provided for any straddled vehicle other than the illustrated motorcycle. The straddled vehicle according to the present specification is meant as any vehicle to be straddled by a rider who rides it, without being limited to two-wheeled vehicles. The straddled vehicle may be a three-wheeled vehicle, etc., of a type whose direction of travel is changed as the body is tilted, and may be other types of straddled vehicles such as ATVs (All Terrain Vehicles).

### INDUSTRIAL APPLICABILITY

According to an embodiment of the present invention, it is possible to reduce friction loss between a piston skirt and a cylinder wall in an internal combustion engine including an aluminum piston and an aluminum cylinder, and also suppress temperature increase in the aluminum piston.

An internal combustion engine according to an embodiment of the present invention is suitably used for straddled vehicles.

### REFERENCE SIGNS LIST

- **10**: cylinder (cylinder block)
- **11**: cylinder bore
- **11a**: cylinder axis
- **12**: cylinder wall
- **20**: cylinder head
- **21**: intake port
- **22**: exhaust port
- **23**: intake valve
- **24**: exhaust valve
- **30**: crankcase
- **40**: piston
- **41**: piston head
- **42**: piston skirt
- **42a**: first skirt section
- **42b**: second skirt section
- **43a, 43b, 43c**: piston ring
- **44**: piston pin boss
- **44a**: piston pin hole
- **45**: rib
- **48**: piston pin
- **50**: crankshaft
- **51**: crankpin
- **52**: crank arm
- **60**: connecting rod
- **61**: rod main body
- **62**: small end
- **63**: big end
- **66**: bearing
- **70**: combustion chamber
- **100**: internal combustion engine (engine)
- **200**: straddled vehicle (motorcycle)
- **b1**: base
- **r1**: resin layer

## Claims

1. An internal combustion engine for straddled vehicles, comprising:
a cylinder (10) made of an aluminum alloy, the cylinder (10) having a cylinder wall (12) which defines a cylinder bore (11);
a piston (40) made of an aluminum alloy, the piston (40) being accommodated in the cylinder bore (11) and being capable of reciprocating in a first direction (D1) which is parallel to a cylinder axis (11a) and in a second direction (D2) which is opposite to the first direction (D1); and
a cylinder head (20) at an end of the cylinder bore (11) in the first direction (D1), the cylinder head (20) defining a combustion chamber (70) together with the cylinder wall (12) and the piston (40), wherein,
the piston (40) includes
a piston head (41) which defines an end of the combustion chamber (70) in the second direction (D2), and
a piston skirt (42) extending in the second direction (D2) from an outer periphery of the piston head (41);
the piston skirt (42) has fiber flow lines (F); and
the piston skirt (42) is divided into a pair of skirt sections (42a,42b) positioned so that the cylinder axis (11a) is interposed therebetween along a radial direction, **characterized in that**
an outer peripheral surface of the piston skirt (42) is at least partially coated with a resin, wherein a length L of the piston skirt (42) along the second direction (D2) and a diameter D of the cylinder bore (11) satisfy the relationship L/D ≥ 0.3.

2. The internal combustion engine for straddled vehicles of claim 1, **characterized in that** the piston skirt (42) lacks any protrusion to serve as a reference for processing.

3. The internal combustion engine for straddled vehicles of claim 1 or 2, **characterized in that** the piston (40) is made of an aluminum alloy containing Cu in an amount of not less than 3.0 mass% and not more than 5.5 mass%.

4. The internal combustion engine for straddled vehicles of any of claims 1 to 3, **characterized in that** the piston (40) is made of an aluminum alloy containing Fe in an amount of not less than 0.1 mass% and not more than 1.0 mass%.

5. The internal combustion engine for straddled vehicles of any of claims 1 to 4, **characterized in that** the piston (40) includes a pair of piston bosses (44); and, when one of the pair of skirt sections (42a,42b) is viewed in such a manner that the one skirt section appears to overlap the cylinder axis (11a), ends of the pair of piston bosses (44) are located outside of the one skirt section along a radial direction.

6. A straddled vehicle comprising the internal combustion engine for straddled vehicles of any of claims 1 to 5.

## Patentansprüche

1. Eine Brenn-Kraft-Maschine mit innerer Verbrennung für Spreiz-Sitz-Fahrzeuge, die umfasst:
einen Zylinder (10), der aus einer Aluminium-Legierung gemacht ist, der Zylinder (10) hat eine Zylinder-Wand (12) aufweist, die eine Zylinder-Bohrung (11) definiert;
einen Kolben (40), der aus einer Aluminium-Legierung gemacht ist, der Kolben (40) ist in der Zylinder-Bohrung (11) untergebracht ist, und ist in der Lage sich in einer ersten Richtung (D1), die parallel zu einer Zylinder-Achse (11a) ist, und in einer zweiten Richtung (D2), die der ersten Richtung (D1) entgegengesetzt ist, hin und her zu bewegen; und
einen Zylinder-Kopf (20) an einem Ende der Zylinder-Bohrung (11) in der ersten Richtung (D1), der Zylinder-Kopf (20) definiert einen Brennraum (70) zusammen mit der Zylinder-Wand (12) und dem Kolben (40), wobei,
der Kolben (40) beinhaltet
einem Kolben-Kopf (41), der ein Ende des Brennraums (70) in der zweiten Richtung (D2) definiert, und
ein Kolben-Hemd (42), das sich in der zweiten Richtung (D2) von einem Außenumfang des Kolben-Kopfes (41) erstreckt;
das Kolben-Hemd (42) Faser-Fluss-Linien (F) aufweist; und
das Kolben-Hemd (42) in ein Paar Hemd-Abschnitte (42a, 42b) unterteilt ist, die so positioniert sind, dass die Zylinder-Achse (11a) entlang einer radialen Richtung dazwischen angeordnet ist, **dadurch gekennzeichnet, dass**
eine Außen-Umfangs-Fläche des Kolben-Hemds (42) zumindest teilweise mit einem Harz beschichtet ist, wobei eine Länge L des Kolben-Hemds (42) entlang der zweiten Richtung (D2) und ein Durchmesser D der Zylinder-Bohrung (11) die Beziehung L/D ≥ 0,3 erfüllen.

2. Die Brenn-Kraft-Maschine mit innerer Verbrennung für Spreiz-Sitz-Fahrzeuge gemäß Anspruch 1, **dadurch gekennzeichnet, dass** das Kolben-Hemd (42) keinen Vorsprung aufweist, der als Referenz für die Bearbeitung dient.

3. Die Brenn-Kraft-Maschine mit innerer Verbrennung für Spreiz-Sitz-Fahrzeuge gemäß Anspruch 1 oder 2, **dadurch gekennzeichnet, dass** der Kolben (40) aus einer Aluminium-Legierung besteht, die Cu in einer Menge von nicht weniger als 3,0 Massen-% und nicht mehr als 5,5 Massen-% enthält.

4. Die Brenn-Kraft-Maschine mit innerer Verbrennung für Spreiz-Sitz-Fahrzeuge gemäß irgendeinem der Ansprüche 1 bis 3, **dadurch gekennzeichnet, dass** der Kolben (40) aus einer Aluminium-Legierung hergestellt ist, die Fe in einer Menge von nicht weniger als 0,1 Massen-% und nicht mehr als 1,0 Massen-% enthält.

5. Die Brenn-Kraft-Maschine mit innerer Verbrennung für Spreiz-Sitz-Fahrzeuge gemäß irgendeinem der Ansprüche 1 bis 4, **dadurch gekennzeichnet, dass** der Kolben (40) ein Paar von Kolbenbolzenaugen (44) beinhaltet; und,
wenn einer des Paares von Hemd-Abschnitten (42a, 42b) betrachtet wird, so dass der eine Hemd-Abschnitt die Zylinder-Achse (11a) zu überlappen scheint, befinden sich die Enden des Paares von Kolbenbolzenaugen (44) außerhalb des einen Hemd-Abschnitts entlang einer radialen Richtung.

6. Ein Spreiz-Sitz-Fahrzeug, das eine Brenn-Kraft-Maschine mit innerer Verbrennung für Spreiz-Sitz-Fahrzeuge gemäß einem der Ansprüche 1 bis 5 umfasst.

## Revendications

1. Moteur à combustion interne pour véhicules à enfourcher, comprenant :
un cylindre (10) constitué d'un alliage d'aluminium, le cylindre (10) présentant une paroi de cylindre (12) qui définit un alésage de cylindre (11) ;
un piston (40) constitué d'un alliage d'aluminium, le piston (40) étant accueilli dans l'alésage de cylindre (11) et étant capable d'effectuer un mouvement alternatif dans une première direction (D1) qui est parallèle à un axe de cylindre (11a) et dans une deuxième direction (D2) qui est opposée à la première direction (D1); et
une culasse de cylindre (20) à une extrémité de l'alésage de cylindre (11) dans la première direction (D1), la culasse de cylindre (20) définissant une chambre de combustion (70) conjointement avec la paroi de cylindre (12) et le piston (40), dans lequel,
le piston (40) inclut
une tête de piston (41) qui définit une extrémité de la chambre de combustion (70) dans la deuxième direction (D2), et
une jupe de piston (42) s'étendant dans la deuxième direction (D2) depuis une périphérie extérieure de la tête de piston (41) ;
la jupe de piston (42) présente des rainures d'écoulement en fibre (F) ; et
la jupe de piston (42) est divisée en une paire de sections de jupe (42a, 42b) positionnées de sorte que l'axe de cylindre (11a) s'interpose entre celles-ci le long d'une direction radiale, **caractérisé en ce que**
une surface périphérique extérieure de la jupe de piston (42) est au moins partiellement revêtue d'une résine, dans lequel une longueur L de la jupe de piston (42) le long d'une deuxième direction (D2) et un diamètre D de l'alésage de cylindre (11) satisfont la relation L/D ≥ 0,3.

2. Le moteur à combustion interne pour véhicules à enfourcher de la revendication 1, **caractérisé en ce que** la jupe de piston (42) est exempte de toute protrusion pour servir de référence pour traitement.

3. Le moteur à combustion interne pour véhicules à enfourcher de la revendication 1 ou 2, **caractérisé en ce que** le piston (40) est constitué d'un alliage d'aluminium contenant du Cu dans une quantité d'au moins 3,0 pour cent de masse et d'au plus 5,5 pour cent de masse.

4. Le moteur à combustion interne pour véhicules à enfourcher de l'une quelconque des revendications 1 à 3, **caractérisé en ce que** le piston (40) est constitué d'un alliage d'aluminium contenant du Fe dans une quantité d'au moins 0,1 pour cent de masse et d'au plus 1,0 pour cent de masse.

5. Le moteur à combustion interne pour véhicules à enfourcher de l'une quelconque des revendications 1 à 4, **caractérisé en ce que** le piston (40) inclut une paire de bossages (44) ; et, lorsqu'une de la paire de sections de jupe (42a, 42b) est visualisée de telle manière que l'une section de jupe se présente chevauchant l'axe de cylindre (11a), des extrémités de la paire de bossages de piston (44) sont situées à l'extérieur de l'une section de jupe le long d'une direction radiale.

6. Véhicule à enfourcher comprenant le moteur à combustion interne pour véhicules à enfourcher de l'une quelconque des revendications 1 à 5.
